(19) Europäisches Patentamt
European Patent Office
Office européen des brevets

(11) Veröffentlichungsnummer: **0 024 321**
**B1**

(12) # EUROPÄISCHE PATENTSCHRIFT

(45) Veröffentlichungstag der Patentschrift: **23.02.83**

(51) Int. Cl.³: **C 09 B 44/04,** D 21 H 3/80

(21) Anmeldenummer: **80104579.0**

(22) Anmeldetag: **02.08.80**

(54) **Kationische Azofarbstoffe, ihre Herstellung, ihre Verwendung zum Färben von Papier und sie enthaltende Mittel.**

(30) Priorität: **16.08.79 DE 2933030**

(43) Veröffentlichungstag der Anmeldung: **04.03.81 Patentblatt 81/9**

(45) Bekanntmachung des Hinweises auf die Patenterteilung: **23.02.83 Patentblatt 83/8**

(84) Benannte Vertragsstaaten: **DE FR GB IT**

(56) Entgegenhaltungen:
**DE-A-265 314**
**US-A-4 046 502**
**US-A-4 065 500**

(73) Patentinhaber: **BAYER AG, Zentralbereich Patente, Marken und Lizenzen, D-5090 Leverkusen 1, Bayerwerk (DE)**

(72) Erfinder: **Nickel, Horst, Dr., Fontanestrasse 23, D-5090 Leverkusen (DE)**
Erfinder: **Müller. Friedhelm, Dr., Zum Hahnenberg 62, D-5068 Odenthal (DE)**
Erfinder: **Mummenhoff, Peter, Dr., Silesiusstrasse 76, D-5000 Koeln 80 (DE)**

**EP 0 024 321 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Kationische Azofarbstoffe, ihre Herstellung, ihre Verwendung zum Färben von Papier und sie enthaltende Mittel

Gegenstand der Erfindung ist die Verwendung von kationischen Azofarbstoffen der Formel

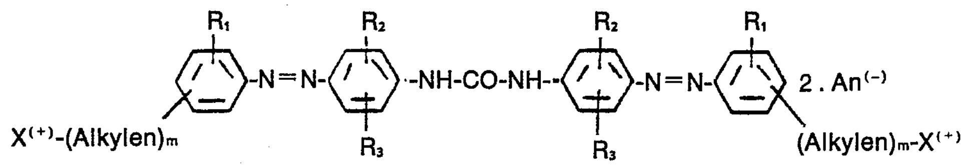

(I)

die symmetrisch oder unsymmetrisch sein kann, und worin

$X^{(+)}$ eine Ammoniumgruppe,
m 0 oder 1,
$R_1$ Wasserstoff, $C_1$- bis $C_4$-Alkyl, Halogen oder $C_1$- bis $C_4$-Alkoxy,
$R_2$ und $R_3$ unabhängig voneinander Wasserstoff, $C_1$- bis $C_4$-Alkyl, $C_1$- bis $C_4$-Alkoxy oder Acylamino und
$An^{(-)}$ ein Anion bedeuten,

zum Färben von Papier.

Bevorzugt sind jedoch die symmetrischen Farbstoffe, in denen diese Reste gleich sind.

Alkylen steht insbesondere für einen Rest mit 1 bis 3 Kohlenstoffatomen. Unter Acylamino wird vorzugsweise $C_1$- bis $C_3$-Alkylcarbonylamino, $C_1$- bis $C_3$-Alkylsulfonylamino, Aminocarbonylamino oder Benzoylamino, insbesondere aber Acetylamino, Propionylamino oder Aminocarbonylamino verstanden. Halogen steht vorzugsweise für Chlor oder Brom. Von den Farbstoffen der Formel (I) sind die Farbstoffe der Formel

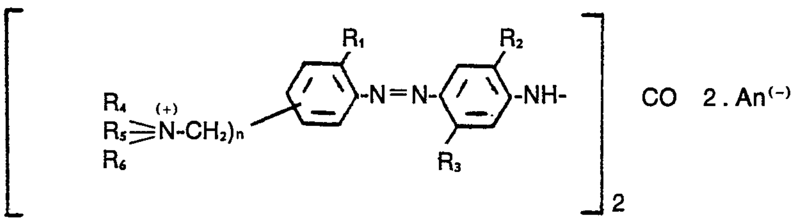

(II)

hervorzuheben, worin

$R_1$, $R_2$, $R_3$ und $An^{(-)}$ die in Formel I angegebene Bedeutung haben, und

n 0 bis 2 und

$R_4$, $R_5$ und $R_6$ unabhängig voneinander Wasserstoff, $C_1$- bis $C_4$-Alkyl, $C_3$- oder $C_4$-Alkenyl, Benzyl oder Phenylethyl, die durch Hydroxy, $C_1$- bis $C_4$-Alkoxy, Chlor oder Cyan und der Benzyl- und Phenylethylrest zusätzlich durch $C_1$- bis $C_4$-Alkyl substituiert sein können,

bedeuten.

Besonders bevorzugt sind Farbstoffe der Formel (II), worin

$R_1$ für Wasserstoff, Methyl, Chlor oder Methoxy,

$R_2$ und $R_3$ unabhängig voneinander für Wasserstoff, Methyl, Methoxy, Acetylamino, Propionylamino oder Aminocarbonylamino,

$R_4$, $R_5$ und $R_6$ unabhängig voneinander für Methyl, Ethyl, Hydroxyethyl, Chlorethyl, Cyanethyl, Benzyl oder Allyl, und

n für 0 oder 1, besonders für 0, stehen.

Als Anionen $An^{(-)}$ kommen die für kationische Farbstoffe üblichen farblosen organischen und anorganischen Anionen beispielsweise Clorid, Bromid, Jodid, Hydroxyl, Hydrogensulfat, Sulfat Nitrat, Dihydrogenphosphat, Hydrogenphosphat, Phosphat, Carbonat, Methosulfat, Ethosulfat, Acetat, Propionat, Benzolsulfonat und Toluolsulfonat in Betracht.

Das Anion ist im allgemeinen durch das Herstellungsverfahren gegeben. Vorzugsweise liegen die Farbstoffe als Chloride, Hydrogensulfate, Sulfate, Methosulfate oder Acetate vor. Die Anionen können in bekannter Weise gegen andere Anionen ausgetauscht werden.

Gegenstand der Erfindung sind ausserdem Farbstoffe der Formel (I), worin die Substituenten die vorstehend genannte Bedeutung haben, worin jedoch $R_3$ verschieden ist von Methyl, wenn m für null, X für Trimethylammonium und $R_2$ für Methoxy stehen.

Von diesen Farbstoffen sind besonders wertvoll die Farbstoffe der Formeln

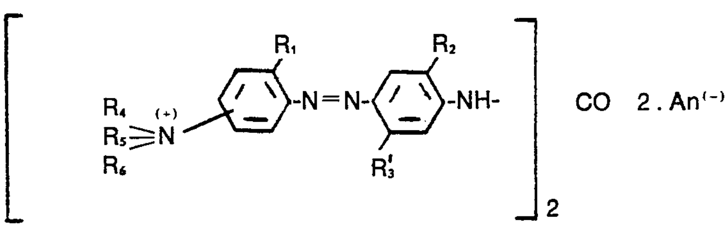

(III)

worin

$R_3'$ für Wasserstoff oder Methoxy steht,

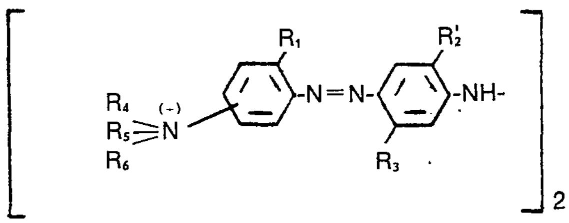

CO 2 . An$^{(-)}$ (IV)

worin

$R_2$' für Wasserstoff oder Methyl steht, und

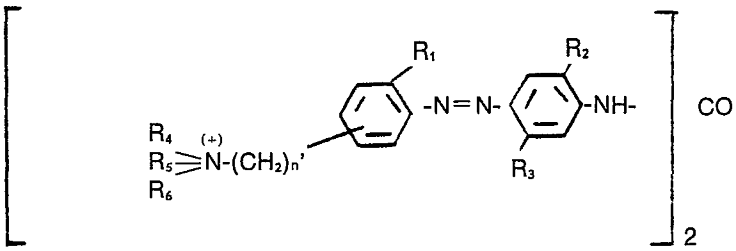

CO 2 . An$^{(-)}$ (V)

worin

n' für 1 oder 2 steht,

worin $R_1$, $R_2$, $R_3$ und An$^{(-)}$ die in Formel (I) genannte Bedeutung haben, und

$R_4$, $R_5$ und $R_6$ die in Formel (II) genannte Bedeutung haben.

Die Farbstoffe der Formel (I) werden hergestellt, indem man in üblicher Weise Aminoazoverbindungen der Formel

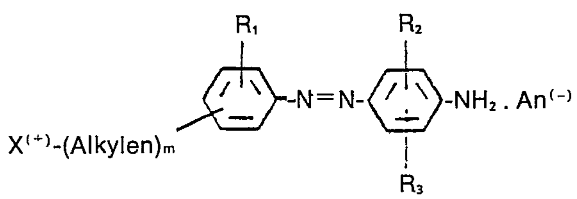

(VI)

oder deren Mischungen oder der Formel

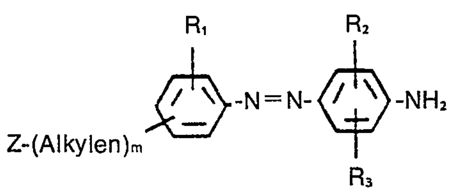

(VII)

oder deren Mischungen,

worin $X^{(+)}$ m, $R_1$, $R_2$, $R_3$ und An$^{(-)}$ die in Formel (I) angegebene Bedeutung haben, und Z eine tertiäre Aminogruppe bedeutet,

mit Phosgen umsetzt und im Falle der Verbindungen (VII) anschliessend mit einem Quaternierungsmittel behandelt.

Als Quaternierungsmittel kommen z. B. in Betracht: Halogenide wie Methylchlorid oder -bromid, Ethylchlorid oder -bromid, Allylchlorid oder Benzylchlorid, Arylsulfonsäureester wie Benzolsulfonsäure-methyl- oder -ethylester, Toluolsulfonsäure-methyl- oder -ethylester, Schwefelsäureester wie Dimethyl- oder Diethylsulfat.

Die Aminoazoverbindungen der Formeln (VI) erhält man durch Kupplung von Diazoniumverbindungen der Amine der Formel

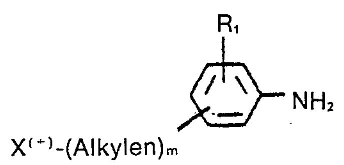

An$^{(-)}$ (VIII)

bzw.

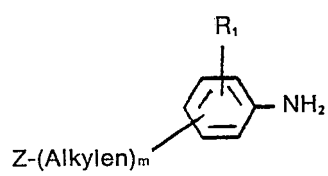

(IX)

mit dem Kupplungskomponenten der Formel

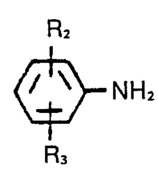

(X)

worin die Symbole die in den Formeln (I) und (VII) angegebene Bedeutung haben. Die Kupplungskomponenten müssen gegebenenfalls in

Form ihrer N-Methansulfonsäure-Derivate eingesetzt werden.

Geeignete Amine der Formeln (VIII) und (IX) sind beispielsweise:

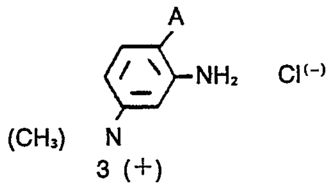

A = H, Cl, $CH_3$, $OCH_3$

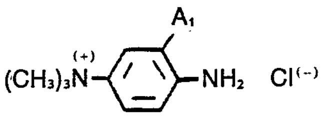

$A_1$ = H, $CH_3$

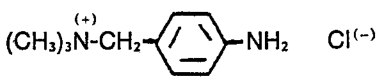

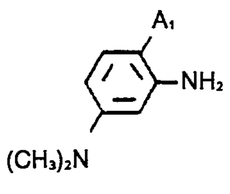

$A_1$ = H, $CH_3$

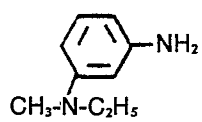

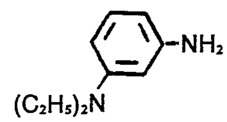

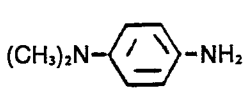

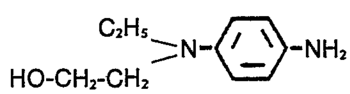

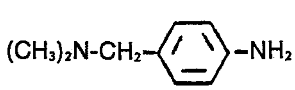

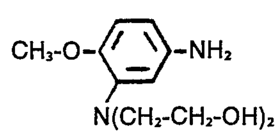

Geeignete Kupplungskomponenten (X) sind beispielsweise (die z. T. als N-Methansulfonsäuren eingesetzt werden müssen) Anilin, 2- oder 3-Aminotoluol, 2-Aminoanisol, 3-Aminoanisol, 3-Amino-4-methoxy-toluol, 2-Amino-4-methoxy-toluol, 2-Ethylanilin, 2-Ethoxy-anilin, 3-Acetylaminoanilin, 3-Propionylamino-anilin, 3-Aminophenylharnstoff.

Die Farbstoffe (I) werden zum Färben von Papier entweder als Farbstoff-Pulver-Präparationen verwendet oder bevorzugt in Form von konzentrierten Farbstoff-Lösungen zum Einsatz gebracht. Pulver-Präparationen werden in üblicher Weise mit Coupagemitteln wie Natriumsulfat, -phosphaten, -chlorid, -acetat eingestellt oder als Sprühtrocknungsmarken in den Handel gebracht. Die konzentrierten Farbstoff-Lösungen können wässriger oder wässrig/organischer Art sein, wobei übliche umweltfreundliche und möglichst gut abbaubare organische Zusätze bevorzugt werden, wie organische Säuren vzw. Essigsäure, Ameisensäure, Amide wie Formamid, Dimethylformamid, Harnstoff, Alkohole wie Glykol, Diglykol, Diglykoläther vzw. Methyl- oder Ethyläther. Die Herstellung der konzentrierten Farbstoff-Lösungen erfolgt in üblicher Weise beispielsweise durch Auflösen des Farbstoffs (als Paste oder Pulver) im geeigneten Lösungsmittel oder Lösungsmittelgemisch.

Die Farbstoff-Pulver oder -Lösungen werden im allgemeinen nach Verdünnen mit Wasser zum kontinuierlichen oder diskontinuierlichen Färben von Papier verwendet.

Eingesetzt werden die Farbstoffe zum Papiermasse-Färben oder zur Papieroberflächenfärbung. Sie sind geeignet für geleimte und für

umgeleimte Papiersorten ausgehend von gebleichtem oder ungebleichtem Zellstoff verschiedener Provenienz wie Nadel- oder Laubholz-Sulfit- und/oder -Sulfat-Zellstoff.

Das Färben erfolgt vorzugsweise bei pH-Werten von 4 bis 8, insbesondere pH 5 bis 7. Die Färbetemperatur beträgt im allgemeinen 10° bis 50°, vzw. etwa 20° (Raumtemperatur).

Die bei der Papierfärbung und -herstellung üblichen Hilfsmittel und Füllstoffe können beim Einsatz der erfindungsgemässen Farbstoffe mitverwendet werden.

Die Farbstoffe besitzen bei der Papierfärbung ein ausgezeichnetes Ziehvermögen.

Die mit den erfindungsgemässen Farbstoffen erhaltenen Papierfärbungen zeichnen sich durch sehr gute Wasserechtheit (Ausblutechtheit) sowie Säure-, Alkali- und Alaun-Echtheit aus. Hervorzuheben ist aber die überraschend hohe Lichtechtheit der Papierfärbungen. Auch auf die Brillanz und Klarheit der Farbtöne ist hinzuweisen. Ferner ist das Kombinationsverhalten mit geeigneten Farbstoffen sehr gut.

Aus US-A 4 065 500, Beispiel 45, ist ein kationischer Azofarbstoff bekannt, der sich von den erfindungsgemässen Farbstoffen durch je einen Substituenten

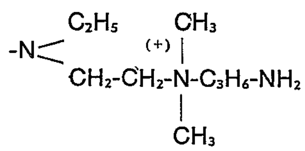

in p-Stellung zu den Azogruppen unterscheidet. Die Brillanz dieses Farbstoffs lässt jedoch zu wünschen übrig.

Aus der DE-A 265 314, Beispiel 1, sind ein kationischer Azofarbstoff, der durch Phosgenierung eines Kupplungsproduktes von diazotiertem 1-Aminophenyl-3-trimethylammonium-chlorid und Kresidin erhalten wurden, und seine Verwendung zum Färben von Baumwolle und Kunstseide bekannt. Aus dieser Verwendung konnte nicht geschlossen werden, dass sich erfindungsgemäss die Farbstoffe der Formel (I) in ausgezeichneter Weise zum Färben von Papier eignen.

Beispiel 1

Ein aus 60% Holzschliff und 40% ungebleichtem Sulfitzellstoff bestehender Trockenstoff wird im Holländer mit Wasser angeschlagen und bis zum Mahlgrad 40° SR gemahlen, so dass der Trockengehalt etwas über 2,5% liegt, und anschliessend mit Wasser auf exakt 2,5% Trockengehalt des Diskstoffs eingestellt.

200 Teile dieses Dickstoffs werden mit 5 Teilen einer 0,5%igen wässrigen Lösung des Farbstoffs der Formel

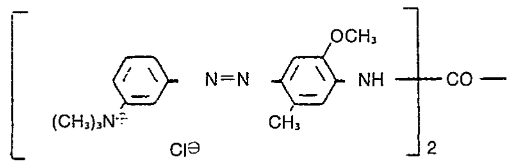
(1.1)

versetzt, ca. 5 Minuten verrührt, 2% Harzleim und 4% Alaun (bezogen auf Trockenstoff) zugegeben und wiederum einige Minuten homogen verrührt. Man verdünnt dann die Masse mit ca. 500 Teilen Wasser und stellt hieraus in üblicher Weise durch Absaugen über einen Blattbildner Papierblätter her. Die Papierblätter weisen eine kräftige rotstichig gelbe Färbung auf. Das Abwasser der Färbung ist praktisch farbstofffrei. Der Farbstoff hat einen $\lambda_{max}$-Wert von 430 nm.

Beim Färben ungeleimter Papiermasse unter sonst gleichen Färbebedingungen erhält man ebenfalls eine kräftige rotstichig gelbe Färbung mit praktisch farbstofffreiem Abwasser.

Verwendet man gebleichten Sulfitzellstoff zur Herstellung des Dickstoffs und setzt diesen Dickstoff zur Färbung ein, so erhält man nach den oben angegebenen Verfahren rotstichig gelbe Papier-Färbungen und praktisch farbstofffreies Abwasser.

Verwendet man anstelle obigen Farbstoffs entsprechende Mengen der Farbstoffe bzw. Farbstoff-Lösungen, die in den nachfolgenden Beispielen beschrieben werden, so erhält man Papierfärbungen, deren Nuancen bei den einzelnen Farbstoff-Beispielen angegeben sind.

Beispiel 2

In eine Lösung von 30,5 Teilen (0,1 Mol) des Aminomonoazofarbstoffs — erhalten durch Kuppeln von diazotiertem 3-Aminophenyltrimethylammoniumchlorid mit 3-Aminotoluol als Kupplungskomponente (1) — in 1000 Teilen Wasser wird bei 30-40°C und pH 5 bis 7 Phosgen eingeleitet (unter Neutralisation mit 10%iger wässriger Natronlauge), bis chromatographisch kein Aminoazofarbstoff mehr nachweisbar ist. Der ausgefallene Harnstoff-Farbstoff wird isoliert und im Vakuum getrocknet. Der Farbstoff färbt Papier in gelben Tönen. Die Papier-Färbung besitzt sehr gute Licht- und Nassechtheiten. Zur Herstellung einer Farbstoff-Lösung wird die isolierte Farbstoff-Paste in ca. 50%iger Essigsäure gelöst.

Verwendet man Aminoazofarbstoffe mit den nachfolgend aufgeführten Kupplungskomponenten, so werden nach der Phosgen-Umsetzung Papierfarbstoffe erhalten, deren Farbtöne angegeben sind.

| | Farbton |
|---|---|
| (2) Anilin (hergestellt über N-Methansulfonsäure und alkalische Verseifung) | gelb |
| (3) 2-Amino-anisol (über N-Methansulfonsäure) | gelb |
| (4) 3-Amino-anisol | rotst. gelb |
| (5) 3-Amino-4-methyl-anisol | rotst. gelb |
| (6) 3-Aminophenyl-harnstoff | rotst. gelb |
| (7) 3-Acetylamino-anilin | rotst. gelb |
| (8) 3-Propionylamino-anilin | rotst. gelb |

Leitet man Phosgen in eine Lösung von je 15 Teilen der Aminoazofarbstoffe mit 3-Aminotoluol und 3-Amino-4-methoxy-toluol als Kupplungskomponente (9) bis kein Aminoazofarbstoff nachweisbar ist, so erhält man nach Isolierung und Trocknung einen Farbstoff, der Papier in gelben Tönnen sehr guter Lichtechtheit färbt. Ähnlich gute Papierfarbstoffe werden erhalten, wenn man die Phosgen-Umsetzung mit der Mischung der Aminoazofarbstoffe mit folgenden Kupplungskomponenten vornimmt

(1) + (2) — etwas grünstichiges Gelb
(2) + (3) — Gelb
(2) + (9) — rotstichiges Gelb
(5) + (9) — rotstichiges Gelb

Verwendet man 3-Amino-4-methoxy-phenyltrimethylammoniumchlorid als Diazokomponente und 3-Aminotoluol oder 3-Amino-4-methoxytoluol oder 3-Amino-4-methyl-anisol als Kupplungskomponente, so erhält man nach der Umsetzung der Aminoazofarbstoffe mit Phosgen Farbstoffe, die Papier in gelben bzw. rotstichig gelben Tönen guter Licht- und Nassechtheit färben.

Verwendet man 3-Amino-4-methoxy-phenyltrimethylammoniumchlorid bzw. Methansulfonat als Diazokomponente und 3-Aminotoluol bzw. 3-Amino-4-methoxy-toluol als Kupplungskomponente, so werden nach Umsetzung mit Phosgen Papierfarbstoffe erhalten, die in rotsichtig gelben Tönnen färben.

Beispiel 3

15 Teile (0,1 Mol) 4-Amino-N,N-dimethylbenzylamin werden in üblicher Weise diazotiert und die erhaltene Diazoniumsalz-Lösung mit der salzsauren Lösung von 14 Teilen 3-Amino-4-methoxy-toluol in 400 Teilen Wasser vereinigt. Durch Zutropfen von Natriumacetat-Lösung (20%ig) wird pH 2,5 eingehalten, bis die Kupplung beendet ist. In die erhaltene Amino-monoazofarbstoff-Lösung wird nun bei Raumtemperatur Phosgen eingeleitet, bis kein Aminoazofarbstoff mehr nachweisbar ist. Der zum Harnstoff umgesetzte Farbstoff wird durch Neutralisation mit 40%iger Natronlauge ausgefällt und isoliert.

Die isolierte Farbstoffpaste wird mit 1200 Teilen Isopropanol bei 50-60° gelöst und Dimethylsulfat zugetropft, wobei pH 6-8 mit 20%iger Natriumcarbonat-Lösung gehalten wird, bis die Umsetzung, die chromatographisch verfolgt wird, beendet ist. Anschliessend säuert man mit 50%iger Essigsäure an und destilliert Isopropanol ab. Nach Klärung (Filtration) von geringen unlöslichen Anteilen erhält man eine konzentrierte Farbstoff-Lösung, die Papier in kräftigen rotstichig gelben Tönen färbt. Die Farbstoff-Lösung ist kältestabil. Der Farbstoff hat einen $\lambda_{max}$-Wert von 425 nm.

Verwendet man als Kupplungskomponente 2-Amino-anisol-N-methansulfonsäure, verseift natronalkalisch nach der Kupplung, isoliert und führt dann mit der Lösung des Aminoazofarbstoffs die Phosgen-Umsetzung und Methylierung durch, so erhält man eine Farbstoff-Lösung, die Papier in etwas rotstichig gelben Tönen färbt.

Ähnliche Papierfarbstoffe bzw. Farbstoff-Lösungen werden erhalten mit Anilin-N-methansulfonsäure oder 3-Amino-toluol (Farbton mittleres Gelb).

**Patentansprüche**

1. Verfahren zum Färben von Papier, dadurch gekennzeichnet, dass man kationische Azofarbstoffe der allgemeinen Formel

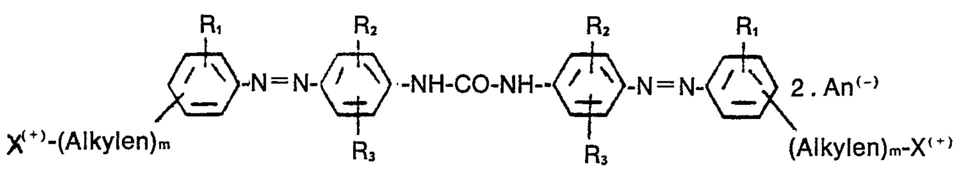

die symmetrisch oder unsymmetrisch sein kann, und worin

$X^{(+)}$ eine Ammoniumgruppe,
m 0 oder 1,
$R_1$ Wasserstoff, $C_1$- bis $C_4$-Alkyl, Halogen oder $C_1$- bis $C_4$-Alkoxy,
$R_2$ und $R_3$ unabhängig voneinander Wasserstoff, $C_1$- bis $C_4$-Alkyl, $C_1$- bis $C_4$-Alkoxy oder Acylamino und
$An^{(-)}$ ein Anion bedeuten,

verwendet.

2. Verfahren nach Anspruch 1, dadurch gekennzeichnet, dass man Farbstoffe der allgemeinen Formel

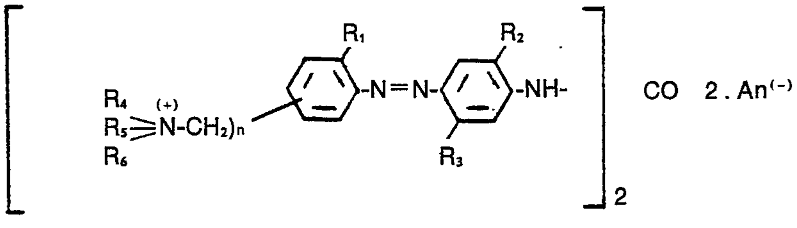

worin
$R_1$, $R_2$, $R_3$ und $An^{(-)}$ die in Anspruch 1 angegebene Bedeutung haben, und
n 0 bis 2 und

$R_4$, $R_5$ und $R_6$ unabhängig voneinander Wasserstoff, $C_1$- bis $C_4$-Alkyl, $C_3$- oder $C_4$-Alkenyl, Benzyl oder Phenylethyl, die durch Hydroxy, $C_1$- bis $C_4$-Alkoxy, Chlor oder Cyan und der Benzyl- und Phenylethylrest zusätzlich durch $C_1$- bis $C_4$-Alkyl substituiert sein können,

bedeuten, verwendet.

3. Verfahren nach Anspruch 2, dadurch gekennzeichnet, dass man Farbstoffe der Formel des Anspruchs 2 verwendet,

worin

$R_1$ für Wasserstoff, Methyl, Chlor oder Methoxy,

$R_2$ und $R_3$ unabhängig voneinander für Wasserstoff, Methyl, Methoxy, Acetylamino, Propionylamino oder Aminocarbonylamino,

$R_4$, $R_5$ und $R_6$ unabhängig voneinander für Methyl, Ethyl, Hydroxyethyl, Chlorethyl, Cyanethyl, Benzyl oder Allyl und

n für 0 oder 1, besonders für 0, stehen.

4. Kationische Azofarbstoffe der allgemeinen Formel

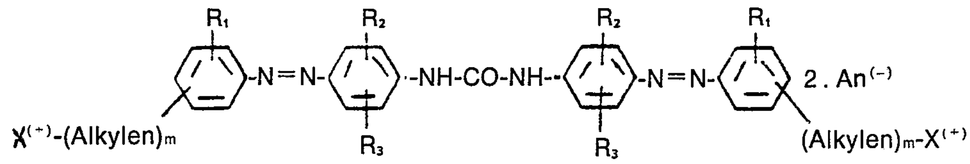

worin

$X^{(+)}$ eine Ammoniumgruppe,

m 0 oder 1,

$R_1$ Wasserstoff, $C_1$ bis $C_4$-Alkyl, Halogen oder $C_1$- bis $C_4$-Alkoxy,

$R_2$ und $R_3$ unabhängig voneinander Wasserstoff, $C_1$ bis $C_4$-Alkyl, $C_1$- bis $C_4$-Alkoxy oder Acylamino und

$An^{(-)}$ ein Anion bedeuten, und

worin die beiden Reste $R_1$, $R_2$ bzw. $R_3$ untereinander verschieden sein können, mit der Massgabe, dass $R_3$ verschieden ist von Methyl, wenn m für null, X für Trimethylammonium und $R_2$ für Methoxy stehen.

5. Kationische Azofarbstoffe der allgemeinen Formel

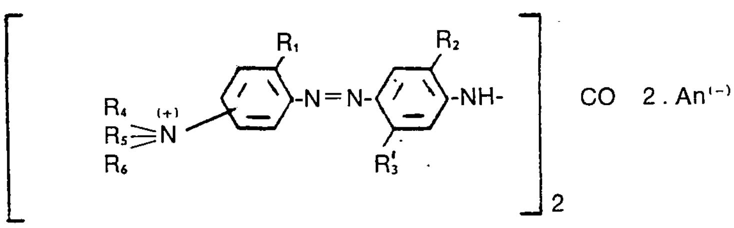

worin

$R_1$ Wasserstoff, $C_1$- bis $C_4$-Alkyl, Halogen oder $C_1$- bis $C_4$-Alkoxy,

$R_2$ Wasserstoff, $C_1$- bis $C_4$-Alkyl, $C_1$- bis $C_4$-Alkoxy oder Acylamino und

$An^{(-)}$ ein Anion bedeuten, und

die beiden Reste $R_1$ bzw. $R_2$ untereinander verschieden sein können,

$R_4$, $R_5$ und $R_6$ unabhängig voneinander Wasserstoff, $C_1$- bis $C_4$-Alkyl, $C_3$- oder $C_4$-Alkenyl, Benzyl oder Phenylethyl, die durch Hydroxy, $C_1$- bis $C_4$-Alkoxy, Chlor oder Cyan und der Benzyl- und Phenylethylrest zusätzlich durch $C_1$- bis $C_4$-Alkyl substituiert sein können, und

$R'_3$ Wasserstoff oder Methoxy bedeuten.

6. Kationische Azofarbstoffe der allgemeinen Formel

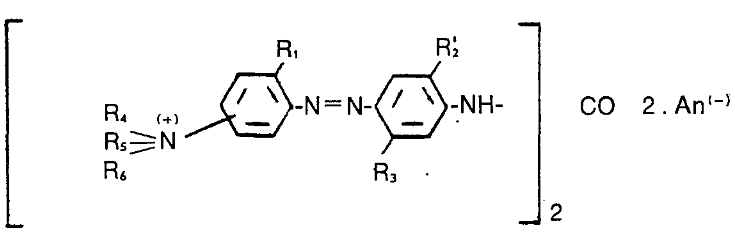

worin

$R_1$ Wasserstoff, $C_1$- bis $C_4$-Alkyl, Halogen oder $C_1$- bis $C_4$-Alkoxy,

$R_3$ Wasserstoff, $C_1$- bis $C_4$-Alkyl, $C_1$- bis $C_4$-Alkoxy oder Acylamino und

$An^{(-)}$ ein Anion bedeuten, und worin die beiden Reste $R_1$ bzw. $R_3$ untereinander verschieden sein können,

$R_4$, $R_5$ und $R_6$ unabhängig voneinander Wasserstoff, $C_1$- bis $C_4$-Alkyl, $C_3$- oder $C_4$-Alkenyl, Benzyl oder Phenylethyl, die durch Hydroxy, $C_1$- bis $C_4$-Alkoxy, Chlor oder Cyan und der Benzyl- und Phenylethylrest zusätzlich durch $C_1$- bis $C_4$-Alkyl substituiert sein können, und

$R'_2$ Wasserstoff oder Methyl bedeuten.

7. Kationische Azofarbstoffe der allgemeinen Formel

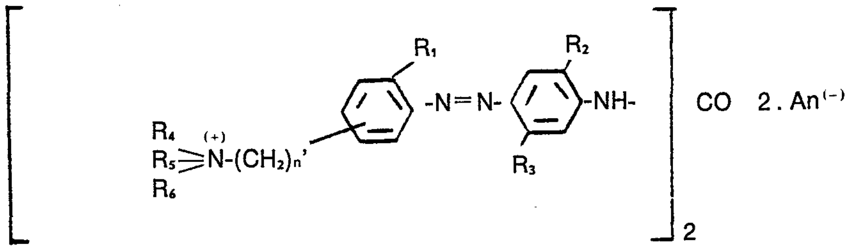

worin

$R_1$ Wasserstoff, $C_1$- bis $C_4$-Alkyl, Halogen oder $C_1$- bis $C_4$-Alkoxy,

$R_2$ und $R_3$ unabhängig voneinander Wasserstoff, $C_1$- bis $C_4$-Alkyl, $C_1$- bis $C_4$-Alkoxy oder Acylamino und

$An^{(-)}$ ein Anion bedeuten, und worin die beiden Reste $R_1$, $R_2$ bzw. $R_3$ untereinander verschieden sein können,

$R_4$, $R_5$ und $R_6$ unabhängig voneinander Wasserstoff, $C_1$- bis $C_4$-Alkyl, $C_3$ oder $C_4$-Alkenyl, Benzyl oder Phenylethyl, die durch Hydroxy, $C_1$- bis $C_4$-Alkoxy, Chlor oder Cyan und der Benzyl- und Phenylethylrest zusätzlich durch $C_1$- bis $C_4$-Alkyl substituiert sein können, und

n' 1 oder 2 bedeuten.

8. Mittel zum Färben von Papier, dadurch gekennzeichnet, dass sie einen kationischen Azofarbstoff des Anspruchs 1 enthalten.

9. Verfahren zur Herstellung von kationischen Azofarbstoffen des Anspruchs 1, dadurch gekennzeichnet, dass man Aminoazoverbindungen der allgemeinen Formel

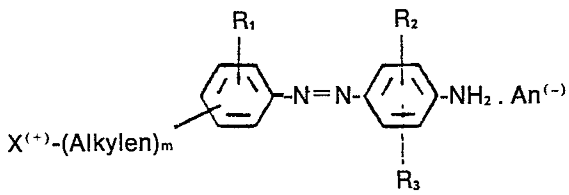

oder deren Mischungen
oder der allgemeinen Formel

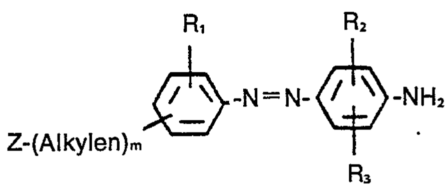

oder deren Mischungen,
worin $X^{(+)}$, m, $R_1$, $R_2$, $R_3$ und $An^{(-)}$ die Bedeutung des Anspruchs 1 haben und Z für eine tertiäre Aminogruppe steht,
mit Phosgen umsetzt und die Gruppe Z zur Gruppe $-X^{(+)}$ . $An^{(-)}$ quaterniert.

**Claims**

1. Process for dyeing paper, characterised in that cationic azo dyestuffs of the general formula

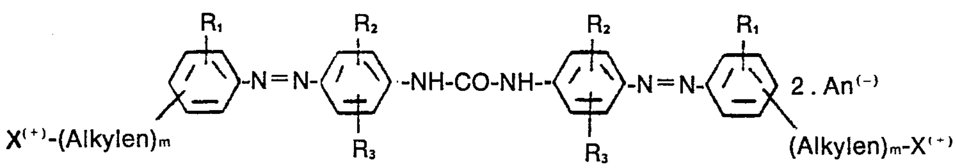

which can be symmetrical or asymmetrical, and wherein

$X^{(+)}$ denotes an ammonium group,

m denotes 0 or 1,

$R_1$ denotes hydrogen, $C_1$- to $C_4$-alkyl, halogen or $C_1$-$C_4$-alkoxy,

$R_2$ and $R_3$ independently of one another denote hydrogen, $C_1$- to $C_4$-alkyl, $C_1$- to $C_4$-alkoxy or acylamino and

$An^{(-)}$ denotes an anion,

are used.

2. Process according to Claim 1, characterised in that dyestuffs of the general formula

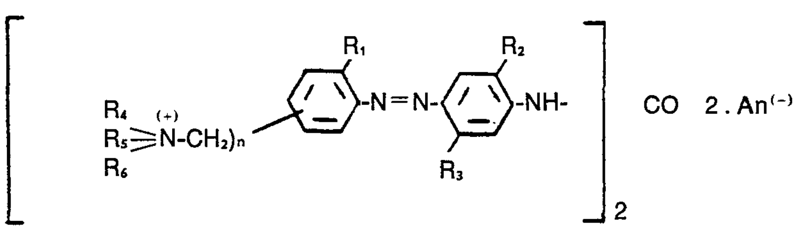

wherein

$R_1$, $R_2$, $R_3$ and $An^{(-)}$ have the meaning indicated in Claim 1,

n denotes a number from 0 to 2 and

$R_4$, $R_5$ and $R_6$ independently of one another denote hydrogen, $C_1$- to $C_4$-alkyl, $C_3$- or $C_4$-alkenyl, benzyl or phenylethyl, it being possible for these radicals to be substituted by hydroxyl, $C_1$- to $C_4$-alkoxy, chlorine or cyano for the benzyl and phenylethyl radical additionally to be substituted by $C_1$- to $C_4$-alkyl,

are used.

3. Process according to Claim 2, characterised in that dyestuffs of the formula of Claim 2, wherein

$R_1$ represents hydrogen, methyl, chlorine or methoxy,

$R_2$ and $R_3$ independently of one another represent hydrogen, methyl, methoxy, acetylamino, propionylamino or aminocarbonylamino,

$R_4$, $R_5$ and $R_6$ independently of one another represent methyl, ethyl, hydroxyethyl, chloroethyl, cyanoethyl, benzyl or allyl and

n represents 0 or 1, in particular 0,

are used.

4. Cationic azo dyestuffs of the general formula

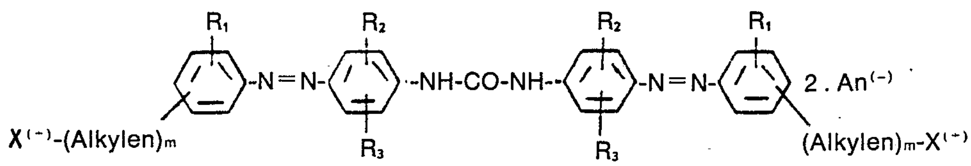

wherein

$X^{(+)}$ denotes an ammonium group,

m denotes 0 or 1,

$R_1$ denotes hydrogen, $C_1$- to $C_4$-alkyl, halogen or $C_1$- to $C_4$-alkoxy,

$R_2$ and $R_3$ independently of one another denote hydrogen, $C_1$- to $C_4$-alkyl, $C_1$- to $C_4$-alkoxy or acylamino and

$An^{(-)}$ denotes an anion,

and wherein the two radicals $R_1$, $R_2$ and $R_3$ can differ from one another, with the proviso that $R_3$ is other than methyl if m represents zero, X represents trimethylammonium and $R_2$ represents methoxy.

5. Cationic azo dyestuffs of the general formula

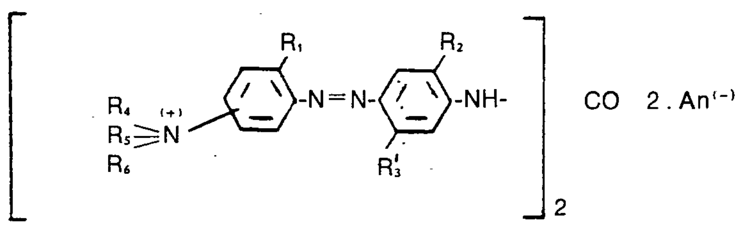

wherein

$R_1$ denotes hydrogen, $C_1$- to $C_4$-alkyl, halogen or $C_1$- to $C_4$-alkoxy,

$R_2$ denotes hydrogen, $C_1$- to $C_4$-alkyl, $C_1$- to $C_4$-alkoxy or acylamino and

$An^{(-)}$ denotes an anion,

and the two radicals $R_1$ and $R_2$ can differ from one another,

and wherein

$R_4$, $R_5$ and $R_6$ independently of one another denote hydrogen, $C_1$- to $C_4$-alkyl, $C_3$- or $C_4$-alkenyl, benzyl or phenylethyl, it being possible for these radicals to be substituted by hydroxyl, $C_1$- to $C_4$-alkoxy, chlorine or cyano and for the benzyl and phenylethyl radical additionally to be substituted by $C_1$- to $C_4$-alkyl, and

$R'_3$ denotes hydrogen or methoxy.

6. Cotionic azo dyestuffs of the general formula

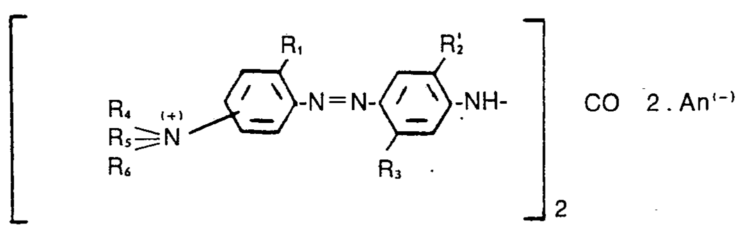

wherein

$R_1$ denotes hydrogen, $C_1$- to $C_4$-alkyl, halogen or $C_1$- to $C_4$-alkoxy,

$R_3$ denotes hydrogen, $C_1$- to $C_4$-alkyl, $C_1$- to $C_4$-alkoxy or acylamino and

$An^{(-)}$ denotes an anion,

and wherein the two radicals $R_1$ and $R_3$ can differ from one another,

and wherein

$R_4$, $R_5$ and $R_6$ independently of one another denote hydrogen, $C_1$- to $C_4$-alkyl, $C_3$- or $C_4$-alkenyl, benzyl or phenylethyl, it being possible for these radicals to be substitlted by hydroxyl, $C_1$- to $C_4$-alkoxy, chlorine of cyano and for the benzyl and phenylethyl radical additionally to be substi-

tuted by $C_1$- to $C_4$-alkyl, and

$R'_2$ denotes hydrogen or methyl.

7. Cationic azo dyestuffs of the general formula

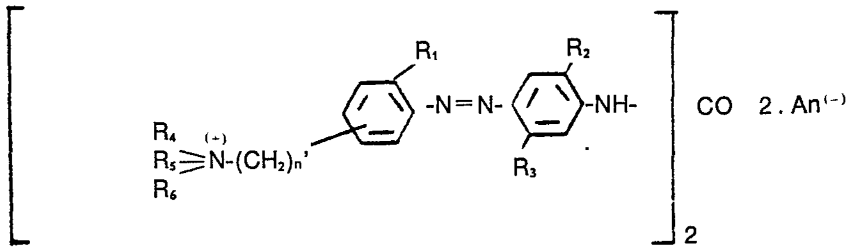

wherein

$R_1$ denotes hydrogen, $C_1$- to $C_4$-alkyl, halogen or $C_1$- to $C_4$-alkoxy,

$R_2$ and $R_3$ independently of one another denote hydrogen, $C_1$- to $C_4$-alkyl, $C_1$- to $C_4$-alkoxy or acylamino and

$An^{(-)}$ denotes an anion,

and wherein the two radicals $R_1$, $R_2$ or $R_3$ can differ from one another,

and wherein

$R_4$, $R_5$ and $R_6$ independently of one another denote hydrogen, $C_1$- to $C_4$-alkyl, $C_3$- or $C_4$-alkenyl, benzyl or phenylethyl, it being possible for these radicals to be substituted by hydroxyl, $C_1$- to $C_4$-alkoxy, chlorine or cyano and for the benzyl and phenylethyl radical additionally to be substituted by $C_1$- to $C_4$-alkyl, and

n' denotes 1 or 2.

8. Agents for dyeing paper, characterised in that they contain a cationic azo dyestuff of Claim 1.

9. Process for the preparation of cationic azo dyestuffs of Claim 1, characterised in that aminoazo compounds of the general formula

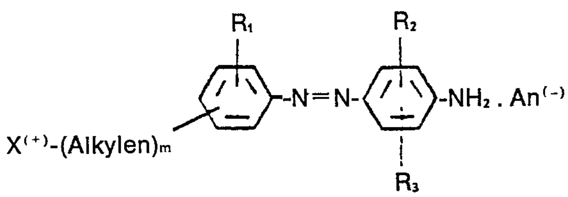

or mixtures thereof, or of the general formula

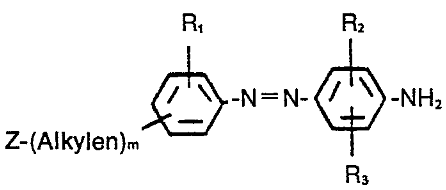

or mixtures thereof,

wherein

$X^{(+)}$, m, $R_1$, $R_2$, $R_3$ and $An^{(-)}$ have the meaning of Claim 1 and

Z represents a tertiary amino group,

are reacted with phosgene, and the group Z is quaternised to the group $-X^{(+)} . An^{(-)}$.

**Revendications**

1. Procédé de teinture du papier, caractérisé par le fait que l'on utilise des colorants azoïques cationiques de formule générale

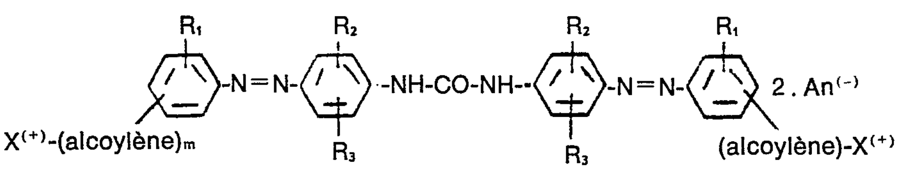

qui peut être symétrique ou asymétrique, et dans laquelle

$X^{(+)}$ signifie un groupe ammonium

m 0 ou 1,

$R_1$ de l'hydrogène, un groupe alcoyle en $C_1$ à $C_4$, un halogène ou un alcoxy en $C_1$ à $C_4$,

$R_2$ et $R_3$, indépendamment l'un de l'autre, de l'hydrogène, un alcoyle en $C_1$ à $C_4$, un alcoxy en $C_1$ à $C_4$, ou un acylamino et

$An^{(-)}$ un anion.

2. Procédé selon la revendication 1, caractérisé par le fait que l'on utilise des colorants de formule générale

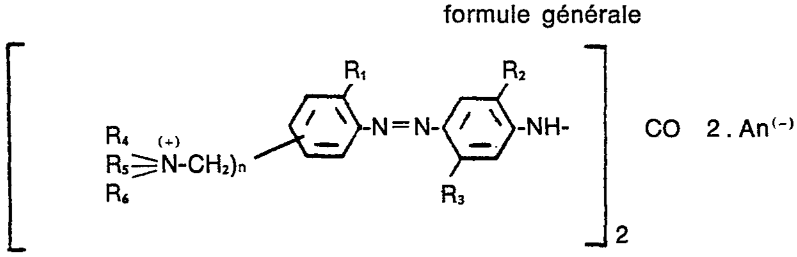

dans laquelle $R_1$, $R_2$, $R_3$ et $An^{(-)}$ ont les mêmes significations que dans la revendication 1, et n est compris entre 0 et 2, et $R_4$, $R_5$ et $R_6$, indépendamment les uns des autres, signifient de l'hydrogène, des groupes alcoyles en $C_1$ à $C_4$, alcényles en $C_3$ ou $C_4$, benzyles ou phényléthyles, qui peuvent être substitués par un groupe hydroxy, des groupes alcoxy en $C_1$ à $C_4$, du chlore ou un groupe cyano, et un outre les restes benzyles et phényles par un groupe alcoyle en $C_1$ à $C_4$.

3. Procédé selon la revendication 2, caractérisé par le fait que l'on utilise les colorants de la revendication 2, où $R_1$ est de l'hydrogène, du méthyle, du chlore ou un groupe méthoxy, $R_2$ et $R_3$, indépendamment l'un de l'autre, de l'hydrogène, des groupes méthyles, méthoxy, acétylamino, propionylamino ou aminocarboxylamino, $R_4$, $R_5$ et $R_6$ indépendamment l'un de l'autre un groupe méthyle, éthyle, hydroxyéthyle, chloroéthyle, cyanéthyle, benzyle ou allyle, et n est 0 ou 1, notamment 0.

4. Colorants azoïques cationiques de formule générale

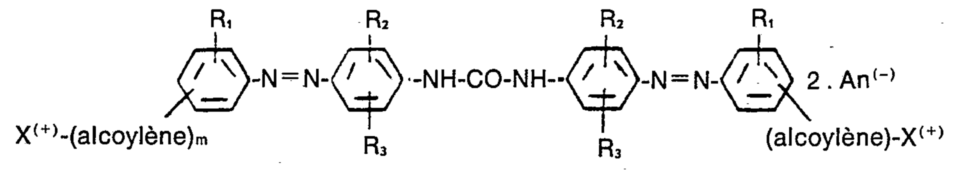

qui peut être symétrique ou asymétrique, et dans laquelle

$X^{(+)}$ signifie un groupe ammonium

m 0 ou 1,

$R_1$ de l'hydrogène, un groupe alcoyle en $C_1$ à $C_4$, un halogène ou un alcoxy en $C_1$ à $C_4$,

$R_2$ et $R_3$, indépendamment l'un de l'autre, de l'hydrogène, un alcoyle en $C_1$ à $C_4$, un alcoxy en $C_1$ à $C_4$, ou un acylamino et

$An^{(-)}$ un anion et où les deux restes $R_1$, $R_2$ ou respectivement $R_3$ peuvent être différents les uns des autres, dans la mesure où $R_3$ est différent du méthyle, lorsque un est nul, X du triméthylammonium et $R_2$ du méthoxy.

5. Colorants azoïques cationiques de formule générale

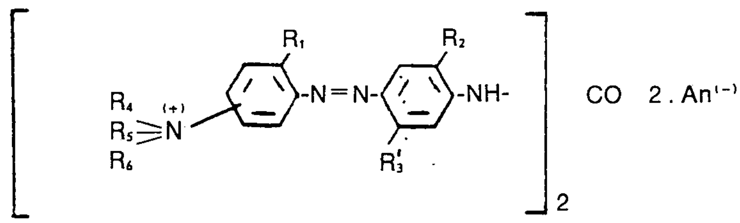

où $R_1$ signifie de l'hydrogène, un alcoyle en $C_1$ à $C_4$, un halogène ou un alcoxy en $C_1$ à $C_4$, $R_2$ l'hydrogène, un alcoyle en $C_1$ à $C_4$, un alcoxy en $C_1$ à $C_4$ ou un acylamino, et $An^{(-)}$ un ainon, et les deux restes $R_1$ et respectivement $R_2$ peuvent être différents l'un de l'autre, $R_4$, $R_5$ et $R_6$ différents les uns des autres signifient de l'hydrogène, un alcoyle en $C_1$ à $C_4$, un alcényle en $C_3$ ou $C_4$, du benzyle ou du phényléthyle, qui peuvent être substituées par un hydroxy, un alcoxy en $C_1$ à $C_4$, du chlore ou du cyano, et le reste benzyle ou phényléthyle en outre par un alcoyle en $C_1$ à $C_4$, et $R'_3$ de l'hydrogène ou du méthoxy.

6. Colorants cationiques de formule générale

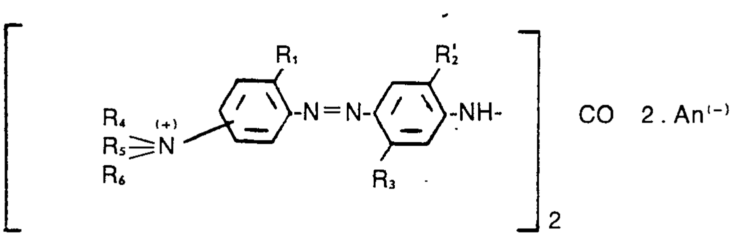

où $R_1$ signifie de l'hydrogène, un alcoyle en $C_1$ à $C_4$, un halogène ou un alcoxy en $C_1$ à $C_4$, $R_3$ de l'hydrogène, un alcoyle en $C_1$ à $C_4$ ou un acylamino et $An^{(-)}$ un ainon, et où les deux restes $R_1$ et respectivement $R_3$ peuvent être différents l'un de l'autre, $R_4$, $R_5$ et $R_6$, différents les uns des autres, signifient de l'hydrogène, un alcoyle en $C_1$ à $C_4$, un alcényle en $C_3$ ou $C_4$, un benzyle ou un phénéthyle, qui peuvent être substitués par un hydroxy, un alcoxy en $C_1$ à $C_4$, du chlore ou du cyano, et le reste phényléthyle et benzyle en outre par un alcoyle en $C_1$ à $C_4$, et $R'_2$ de l'hydrogène ou du méthyle.

7. Colorants azoïques cationiques de formule générale

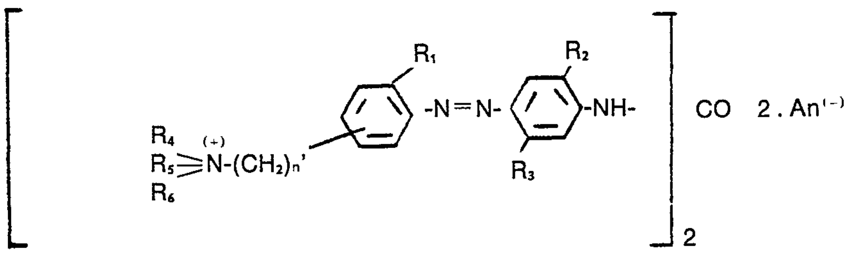

où $R_1$ signifie de l'hydrogène, un alcoyle en $C_1$ à $C_4$, un halogène, ou un alcoxy en $C_1$ à $C_4$, $R_2$ et $R_3$, différents l'un de l'autre, de l'hydrogène, un alcoyle en $C_1$ à $C_4$, un alcoxy en $C_1$ à $C_4$ ou un acylamino, et $An^{(-)}$ un anion, et ou les deux restes $R_1$, $R_2$ ou respectivement $R_3$ peuvent être différents les uns des autres, $R_4$, $R_5$ et $R_6$, différents les uns des autres, signifient de l'hydrogène, un alcoyle en $C_1$ à $C_4$, un alcényle en $C_3$ ou $C_4$, un benzyle ou un phénéthyle, qui peuvent être substituées par un hydroxy, un alcoxy en $C_1$ à $C_4$, du chlore ou du cyano, et le reste benzyle ou phénéthyle en outre par un alcoyle en $C_1$ à $C_4$, et n est 1 ou 2.

8. Agent pour la teinture du papier, caractérisé par le fait qu'il renferme un colorant cationique azoïque de la revendication 1.

9. Procédé de préparation de colorants azoïques cationiques de la revendication 1, caractérisé par le fait que l'on traite par du phosgène les composés aminoazoïques de formule générale

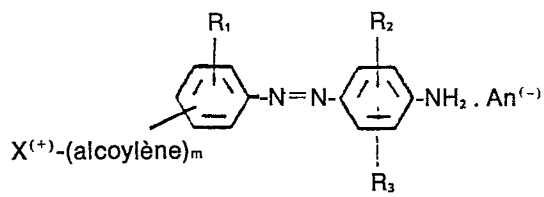

ou ses mélanges, ou bien de formule générale

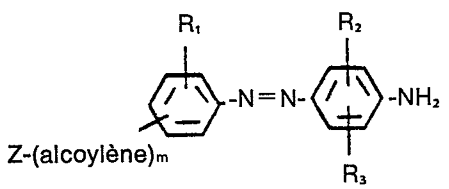

ou ses mélanges, dans lesquelles $X^{(+)}$, m, $R_1$, $R_2$, $R_3$ et $A^{(-)}$ ont la signification de la revendication 1, et 2 correspond à un groupe amino-tertiaire, et on soumet à une quaternisation les groupes $-X^{(+)} . An^{(-)}$.